# EUROPEAN PATENT APPLICATION

(11) **EP 3 321 876 A1**
(43) Date of publication of application: **16.05.2018**
(21) Application number: 16820748.8
(22) Date of filing: 23.06.2016
(51) Int. Cl.: G06Q 50/00, G06Q 10/10

(54) **METHODS AND DEVICES FOR CARRYING OUT SERVICE OPERATION ON THE BASIS OF A CHAT GROUP AND ACQUIRING GROUP MEMBER INFORMATION**

(30) Priority: 07.07.2015 CN 201510395658
(71) Applicant: Alibaba Group Holding Limited, Grand Cayman (KY)
(72) Inventor: JI, Jing, Hangzhou 310099 (CN)
(74) Representative: Conroy, John
(86) International application number: PCT/CN2016/086873
(87) International publication number: WO 2017/005097

(57) **Abstract**

The present application discloses a method for performing a service operation on the basis of a chat group, so as to solve the problem of low efficiency of a service operation manner in the prior art. The method includes: sending a group member selection request to a server corresponding to the chat group; receiving group member information of at least one group member that is determined by the server from the chat group according to a predetermined rule in response to the group member selection request; and responding to execution of a predetermined service operation by the group member corresponding to the group member information, or responding to execution of the predetermined service operation by a group member other than the group member corresponding to the group member information. The present application further discloses an apparatus for performing a service operation on the basis of a chat group, a method for acquiring group member information, and a method and an apparatus for sending group member information.

## Description

### Technical field

The present application relates to the field of Internet technologies, and in particular, to a method and an apparatus for performing a service operation on the basis of a chat group, and a method and an apparatus for acquiring group member information.

### Background

With the development of Internet, more and more social software has emerged. Common social software includes QQ, Wechat, Weibo, Laiwang, and so on. A two-party conversation between two users as well as a multi-party conversation among three or more users can be implemented by using social software. The multi-party conversation is generally referred to as "group chatting". In group chatting, a set of multiple users participating in a same conversation forms a "chat group". Users included in a chat group are "group members" of the chat group. Chat contents between group members are presented in a chat interface of the social software.

Currently, during chatting after a chat group has been established, if a specified service operation (which, for example, may be issuing an electronic red envelope, performing a payment operation for an electronic order, or the like) needs to be accomplished by a particular group member in the chat group, the particular group member first needs to be selected from the chat group, and the specified service operation is executed by the group member after group members in the chat group know information of the particular group member.

According to the prior art, in order to make a group member execute a specified service operation, group members in a chat group edit and send text information that can be displayed in the chat interface, so that processes of selecting the group member and acquiring information of the group member can be implemented. Apparently, such a group member information acquisition manner and service operation manner have a problem of low efficiency.

### Summary

Embodiments of the present application provide a method and an apparatus for performing a service operation on the basis of a chat group, so as to solve the problem of low efficiency in a service operation manner in the prior art.

The embodiments of the present application further provide a method and an apparatus for acquiring group member information of a chat group, so as to solve the problem of low efficiency in group member information acquisition in the prior art.

The embodiments of the present application further provide a method and an apparatus for sending group member information, so as to solve the problem of low efficiency in group member information acquisition in the prior art.

The embodiments of the present application employ the following technical solutions:
A method for performing a service operation on the basis of a chat group, wherein the chat group includes at least two group members, and the method includes:
sending a group member selection request to a server corresponding to the chat group;
receiving group member information of at least one group member that is determined by the server from the chat group according to a predetermined rule in response to the group member selection request; and
responding to execution of a predetermined service operation by the group member corresponding to the group member information, or responding to execution of the predetermined service operation by a group member other than the group member corresponding to the group member information.

A method for performing a service operation on the basis of a chat group, wherein the chat group includes at least two group members, and the method includes:
receiving a group member selection request sent by the chat group;
determining at least one group member from the chat group according to a predetermined rule in response to the group member selection request; and
sending group member information of the determined group member to the chat group, so that the determined group member or a group member other than the determined group member executes a predetermined service operation.

A method for acquiring group member information of a chat group, wherein the chat group includes at least two group members, and the method includes:
sending a group member selection request to a server corresponding to the chat group; and
receiving group member information of at least one group member that is determined by the server from the chat group according to a predetermined rule in response to the group member selection request.

A method for sending group member information, including:
receiving a group member selection request;
acquiring group member information of a chat group in response to the group member selection request;
selecting at least one piece of group member information from the acquired group member information; and
sending the selected group member information to at least one group member in the chat group.

An apparatus for performing a service operation on the basis of a chat group, wherein the chat group includes at least two group members, and the apparatus includes:
a request sending unit configured to send a group member selection request to a server corresponding to the chat group;
a group member information receiving unit configured to receive group member information of at least one group member that is determined by the server from the chat group according to a predetermined rule in response to the group member selection request; and
a service operation unit configured to respond to execution of a predetermined service operation by the group member corresponding to the group member information, or respond to execution of the predetermined service operation by a group member other than the group member corresponding to the group member information.

An apparatus for performing a service operation on the basis of a chat group, wherein the chat group includes at least two group members, and the apparatus includes:
a request receiving unit configured to receive a group member selection request sent by the chat group;
a group member determination unit configured to determine at least one group member from the chat group according to a predetermined rule in response to the group member selection request; and
a group member information sending unit configured to send group member information of the determined group member to the chat group, so that the determined group member or a group member other than the determined group member executes a predetermined service operation.

An apparatus for acquiring group member information of a chat group, wherein the chat group includes at least two group members, and the apparatus includes:
a request sending unit configured to send a group member selection request to a server corresponding to the chat group; and
a group member information receiving unit configured to receive group member information of at least one group member that is determined by the server from the chat group according to a predetermined rule in response to the group member selection request.

An apparatus for sending group member information, including:
a request receiving unit configured to receive a group member selection request;
a group member information acquisition unit configured to acquire group member information of a chat group in response to the group member selection request received by the request receiving unit;
a group member information selection unit configured to select at least one piece of group member information from the group member information acquired by the group member information acquisition unit; and
a group member information sending unit configured to send the group member information selected by the group member information selection unit to at least one group member in the chat group.

The foregoing at least one technical solution employed in the embodiments of the present application can achieve the following beneficial effects:
A group member terminal can acquire information of a group member determined from a chat group while group members in the chat group do not need to edit and send text information that can be displayed in a chat interface, thus responding to execution of a predetermined service operation by the group member corresponding to the group member information or responding to execution of a predetermined service operation by a group member other than the group member corresponding to the group member information. Therefore, execution efficiency of the service operation is improved.

### Detailed Description of the Drawings

The accompanying drawings described herein are used to provide further understanding of the present application, and constitute a part of the present application. Exemplary embodiments of the present application and description thereof are merely used for illustrating the present application, but do not constitute any improper limitation on the present application. In the drawings:
FIG. 1a is a schematic implementation flowchart of a method for performing a service operation on the basis of a chat group according to an embodiment of the present application;
FIG. 1b is a schematic diagram of presenting a button object presentation entry on a chat interface according to an embodiment of the present application;
FIG. 1c is a schematic diagram of presenting various buttons on a chat interface according to an embodiment of the present application;
FIG. 1d is a schematic diagram of displaying, in a chat interface, an image and a nickname of a group member corresponding to received group member information according to an embodiment of the present application;
FIG. 2 is a schematic implementation flowchart of a method for performing a service operation on the basis of a chat group according to an embodiment of the present application;
FIG. 3 is a schematic implementation flowchart of a method for acquiring group member information according to an embodiment of the present application;
FIG. 4 is a schematic implementation flowchart of a method for sending group member information according to an embodiment of the present application;
FIG. 5 is a specific schematic structural diagram of an apparatus for performing a service operation on the basis of a chat group according to an embodiment of the present application;
FIG. 6 is a specific schematic structural diagram of an apparatus for performing a service operation on the basis of a chat group according to an embodiment of the present application; and
FIG. 7 is a specific schematic structural diagram of an apparatus for sending group member information according to an embodiment of the present application.

### Detailed Description

To make the objectives, technical solutions, and advantages of the present application clearer, the technical solutions of the present application will be described clearly and completely below with reference to the specific embodiments of the present application and the corresponding drawings. Apparently, the described embodiments are only some of embodiments rather than all of the embodiments of the present application. All other embodiments obtained by those of ordinary skilled in the art based on the embodiments of the present application without creative efforts belong to the protection scope of the present application.

The technical solutions provided in the embodiments of the present application are described in detail below with reference to the drawings.

### Embodiment 1

To solve the problem of low efficiency in a service operation manner in the prior art, Embodiment 1 of the present application provides a method for performing a service operation on the basis of a chat group. The method may be executed by, but not limited to, at least one of a mobile phone, a tablet computer, a Personal Computer (PC), a smart TV, and any terminal device capable of running social software. In addition, the method may also be executed by the social software.

For ease of description, using the method being executed by social software as an example, implementations of the method are introduced below. It can be understood that the method being executed by social software is merely an exemplary description, but should not be construed as a limitation on the method. The social software in the embodiment of the present application may have some other functions in addition to the function of supporting a chat (which may be a text chat, voice chat, or video chat) of group members. For example, the function supported by the social software may be, but is not limited to, at least one of the following functions:
operation functions for a payment institution (such as a bank) electronic account of the group members: for example, transferring, generating an electronic red envelope, paying for water, electricity, gas and other living facilities, and so on; an electronic shopping function; a QR code scanning function; a function of generating a QR code according to the electronic account; a function of querying stock exchange conditions; a game function; a social information presentation function: for example, presenting information released in Moments or presenting blog content, and so on.

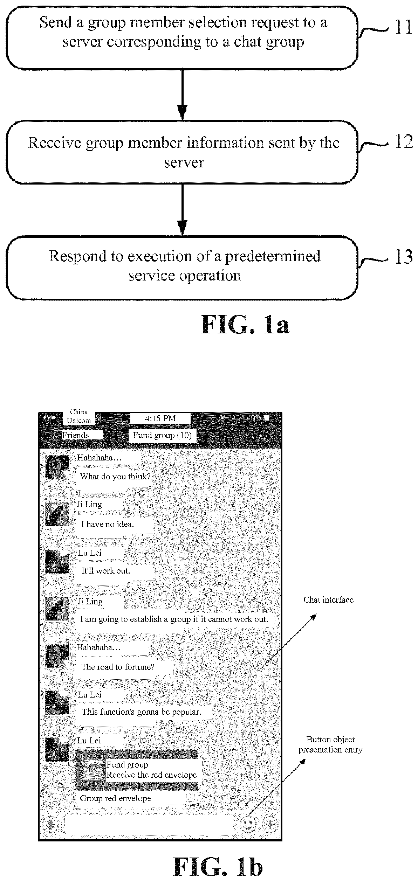

Specifically, a schematic implementation flowchart of a method for performing a service operation on the basis of a chat group according to Embodiment 1 is as shown in FIG. 1a, and the method includes the following main steps:
Step 11: A group member selection request is sent to a server corresponding to the chat group.

The server corresponding to the chat group may be a back-end server of social software or may be any server or device that can respond to the request and execute a corresponding operation. The device may be, for example, an intelligent router or the like.

The corresponding operation mentioned herein at least includes: determining at least one group member from the chat group according to a predetermined rule in response to the group member selection request, and obtaining group member information of the determined group member.

The group member information may be, but is not limited to, an identifier of the group member, such as a real name, a nickname, an ID card number, an account of the group member or a unique number of the group member in the chat group. Alternatively, the information may also be image information of the group member, for example, an avatar picture used by the group member in the chat group, and so on.

In the embodiment of the present application, the server may acquire group member information of the chat group from a database for storing the group member information of the chat group. Generally, the server may use a chat group identifier of the chat group to which the group member belongs as a basis for querying the database. The chat group identifier used as the query basis may be sent by the social software to the server. For example, the social software may add the identifier to the group member selection request or another request, and send the request to the server.

As for the implementation of acquiring the chat group identifier by the social software, generally, the server allocates different chat group identifiers to different chat groups and the chat group identifier may be stored locally in a group member terminal, and therefore, the social software may acquire the chat group identifier from the group member terminal locally. For example, upon receiving a group member selection request sending instruction input by a group member, the social software may determine a chat group identifier corresponding to a current chat of the group member.

Definitely, if the group member that triggers the social software to initiate the group member selection request currently joins in only one chat group, the server may directly determine, according to the identifier of the group member, the chat group to which the group member belongs, and acquire group member information of the chat group. The social software does not need to provide the chat group identifier for the server.

In the embodiment of the present application, after acquiring the group member information of the chat group, the server may determine group member information according to a determination rule. The determination rule may include, but is not limited to, at least one of the following:
randomly determining at least one piece of group member information; sequentially determining at least one piece of group member information according to a descending order (or an ascending order) of degrees of activeness of the group members in the chat group; sequentially determining at least one piece of group member information according to time points when the group members join in the chat group from early to late (or from late to early), and so on.

To make it easy for the group member to trigger the social software to send a group member selection request to the server, in one implementation, a "group member selection request trigger button" may be presented on a chat interface before step 11 is performed.

Based on the selection request trigger button, a specific implementation of step 11 may include:
receiving a trigger instruction for the group member selection request trigger button; and
sending a group member selection request to the server in response to the trigger instruction for the group member selection request trigger button.

In practical application, the specific form of the group member selection request trigger button may be, for example, a regular figure or may be a set picture.

The group member selection request trigger button may be hidden and a button object presentation entry is presented on the chat interface, so that the button does not occupy any display region of the chat interface when the group member does not need to send a group member selection request. FIG. 1b shows a schematic diagram of presenting a button object presentation entry on the chat interface.

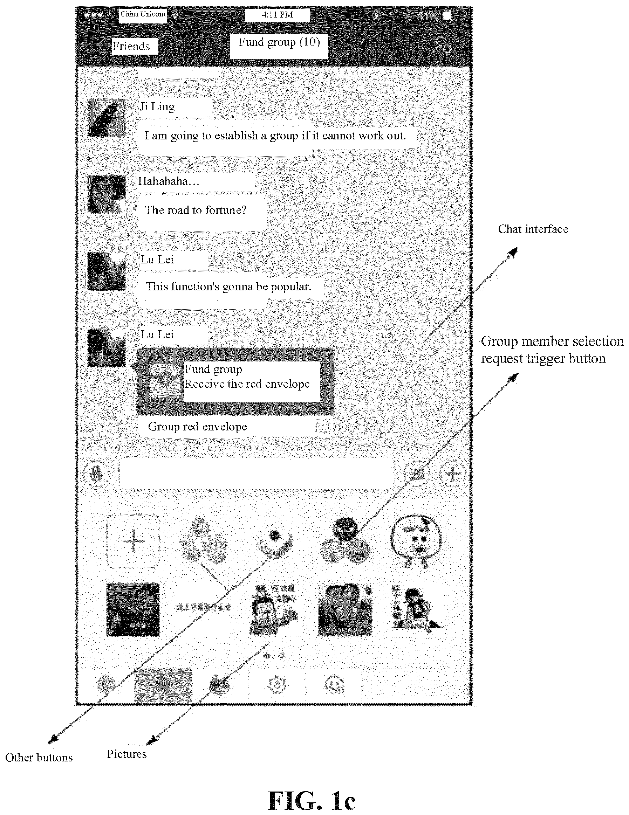

If the group member clicks the button object presentation entry, the social software may be triggered to present various buttons including the group member selection request trigger button. FIG. 1c shows a schematic diagram of presenting some pictures and various buttons including the selection request trigger button on the chat interface after the social software detects that the group member clicks the button object presentation entry.

In the embodiment of the present application, by clicking the button object presentation entry, the group member may also trigger the social software to present the group member selection request trigger button only.

Step 12: Group member information sent by the server is received.

As described above, the group member information sent by the server is information of the group member determined by the server from the group members of the chat group according to the predetermined rule in response to the group member selection request.

To enable the group members to intuitively know which group member is corresponding to the group member information determined by the server, in one implementation, after the group member information sent by the server is received, an image of the group member corresponding to the received group member information may be displayed in the chat interface. For example, when the received group member information is an identifier of a group member, the social software may acquire an image of the group member mapping to the received identifier of the group member according to a mapping relationship between group member identifiers and group member images, and display the acquired image of the group member in the chat interface. For another example, when the received group member information is image information of a group member, an image of the corresponding group member may be directly displayed in the chat interface according to the group member information.

Generally, the image of a group member mentioned herein may refer to an avatar picture used by the group member in the chat group.

In the embodiment of the present application, while the image of a group member is displayed, some text identifiers of the group member may also be displayed. The identifier may be, but is not limited to, a real name of the group member, a nickname of the group member, a unique number of the group member in the chat group, or the like.

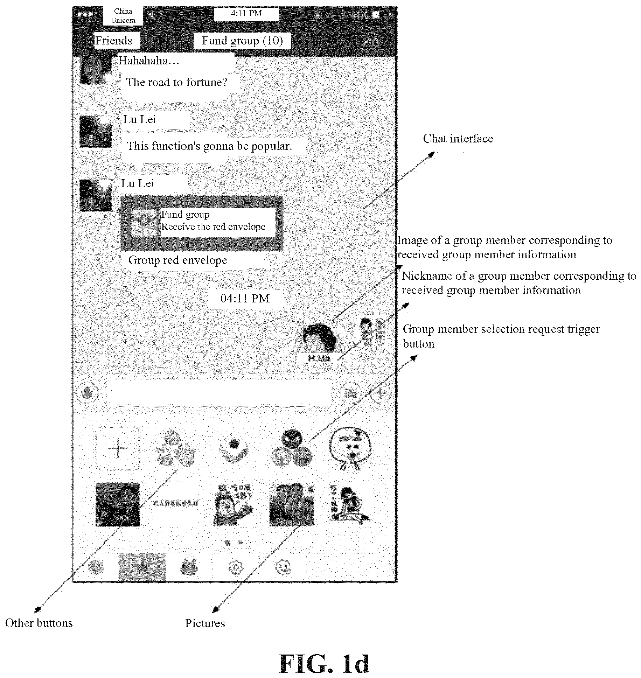

In the embodiment of the present application, a schematic diagram of displaying, in a chat interface, an image and a nickname of a group member corresponding to received group member information is as shown in FIG. 1d.

In the embodiment of the present application, in one implementation, after the group member information sent by the server is received, a text identifier of the group member rather than an image of the group member may be displayed in the chat interface.

It should be noted that in order to enable a user to intuitively sense that the server is in a state of "determining a user from the chat group" after a group member selection request is sent to the server, in one implementation, the social software may perform the following step after step 11 and before step 12:
alternately displaying specific information in the chat interface, to indicate that a group member selection process is being performed. The specific information specifically may be group members in the group or may be several specific images. For example, it is like a face changing process, or the like. Specifically, the following step may be performed:
alternately displaying, in the chat interface, specific information of the group members in the chat group. The specific information includes at least one of an image and a text identifier.

Alternatively, in one implementation, if the chat interface of the chat group is provided with the group member selection request trigger button, the social software may perform the following step after step 11 and before step 12:
displaying the group member selection request trigger button in a predetermined display manner, so that the group member selection request trigger button has a predetermined animation effect. For example, the animation effect may be that expressions of three little avatars on the group member selection request trigger button as shown in FIG. 1c change or the three little avatars turn, and so on.

In the embodiment of the present application, once the group member information sent by the server is received, the alternately displaying of the specific information of the users in the chat group may be stopped. Then, specific information of the group member corresponding to the received group member information is displayed.

For example, after sending a group member selection request, at a particular location of the chat interface and by using an alternately displaying method "scrolling display", the social software may alternately display images of the group members in the chat group in a region where the "image of the group member corresponding to the received group member information" is located as shown in FIG. Id, and at the same time, alternately display nicknames of the users in the chat group in a region where the "nickname of the group member corresponding to the received group member information" is located as shown in FIG. 1d. After information of a group member "Snow White" sent by the server is received, the alternately displaying of the specific information of the users in the chat group may be stopped. Then, specific information of "Snow White" is displayed.

By means of the above step 11 to step 12 provided in the embodiment of the present application, a server can be triggered to determine group member information and send the group member information to a group member terminal as long as a group member determination instruction is sent to the server. Thus, the group member terminal can acquire the group member information determined from information of group members in the chat group, while the group members in the chat group do not need to edit and send text information that can be displayed in a chat interface. Therefore, efficiency of acquiring group member information is improved.

In addition, the social software displays an image and a nickname of the group member corresponding to the group member information sent by the server, so that the group members in the chat group can intuitively and clearly know the group member corresponding to the determined group member information. That is, the foregoing method provided in the embodiment of the present application can efficiently enable the group members to have unified cognition about the determined group member information. Thus, compared with the prior art in which the group members need to edit and issue text information in the chat interface to confirm the group member information of the determined group member, the solution provided in the embodiment of the present application can save processing resources of group member terminals used by the group members while enabling the group members to have unified cognition.

The foregoing group member determining manner usually may be used for quickly determining a group member from a chat group, for example, quickly selecting a host during discussion of a topic, quickly determining a game initiator during a game in the group, and so on. However, in some cases, after a group member is selected from the chat group, it is also desired to assign a particular task, such as some predetermined service operations, to the selected group member or a group member other than the selected group member.

For example, the task may be at least one of the following operations:
sending an electronic red envelope to the group members in the chat group; paying for an electronic order; answering, by inputting text information, a question that is pushed by the server and may be presented in a picture form or a text form, which is similar to playing a "Truth or Dare" game, and so on.

To make it easy for at least one group member in the chat group to execute a predetermined service operation according to the group member information determined by the server, the method provided in the embodiment of the present application may further include the following step as shown in FIG. 1:
Step 13: Execution of a predetermined service operation by the group member corresponding to the group member information is responded to, or execution of the predetermined service operation by a group member other than the group member corresponding to the group member information is responded to.

Specifically, when the predetermined service operation may be performed by the group member corresponding to the group member information determined by the server, the method shown in FIG. 1 may be correspondingly executed by social software used by the group member. When the predetermined service operation may be performed by a group member in the chat group other than the group member corresponding to the group member information determined by the server, the method shown in FIG. 1 may be correspondingly executed by social software used by the another member.

The predetermined service operation mentioned herein may be, but is not limited to, at least one of the following operations:
issuing an electronic red envelope to the group members in the chat group, paying for an electronic order, and so on.

In the embodiment of the present application, in order to make it easy for the social software to execute the predetermined service operation, after sending a group member determination instruction to the server corresponding to the chat group, the social software may receive an interface element presentation instruction sent by the server and present a corresponding interface element according to the interface element presentation instruction.

Based on the presented interface element, the social software responds to execution of the predetermined service operation by the group member corresponding to the server-determined group member information, which may specifically include: responding to execution of the predetermined service operation by the group member corresponding to the server-determined group member information according to the interface element. That the social software responds to execution of the predetermined service operation by a group member other than the group member corresponding to the group member information may specifically include: responding to execution of the predetermined service operation by a group member other than the group member corresponding to the server-determined group member information according to the interface element.

The interface element mentioned herein is limited by the aforementioned predetermined service operation. The interface element may be, but is not limited to, at least one of an operation entry and a text input field. In the embodiment of the present application, it is considered that the predetermined service operation may be: issuing an electronic red envelope to the group members in the chat group, paying for an electronic order, and so on. Therefore, the operation entry may be at least one of the following operation entries: a payment operation entry for an electronic order, and a generation operation entry for an electronic red envelope.

After the social software presents the operation entries, the group member using the social software may select from the presented operation entries. If receiving a selection instruction for an operation entry, the social software may respond to the selection instruction. A specific responding manner may include: the social software executes an operation corresponding to the selected operation entry. Thus, the foregoing step of "responding to execution of the predetermined service operation by the group member corresponding to the server-determined group member information according to the interface element" described above may include: receiving a selection instruction for the operation entry from the group member corresponding to the server-determined group member information; and executing an operation corresponding to the operation entry in response to the selection instruction.

Specifically, that the social software receives a selection instruction for a "payment operation entry for an electronic order" is taken as an example. In response to the instruction, the social software may send a payment request including an electronic order to a payment server, so as to trigger the payment server to perform a deduction operation on a payment institution electronic account of the group member according to the electronic order. It should be noted that the electronic order may be an electronic order which a group member in the chat group requests a merchant server to generate and is shared in the chat group. By sharing the electronic order in the chat group, group member terminals respectively used by all the group members in the chat group can acquire the electronic order. In the embodiment of the present application, when the payment request is sent, the group member may select, according to a prompt of the social software, an electronic order from shared electronic orders in the chat group and use the selected electronic order as the electronic order included in the payment request. Alternatively, the social software may also automatically select an electronic order from shared electronic orders in the chat group and use the selected electronic order as the electronic order included in the payment request. Specifically, for example, the social software may select a recently shared electronic order that has not been paid for yet.

For another example, that the social software receives a selection instruction for a "generation operation entry for an electronic red envelope" is taken as an example. In response to the instruction, the social software may send an electronic red envelope generation request to a server (such as an electronic red envelope server), so as to trigger the server to generate an electronic red envelope according to the electronic red envelope generation request and send the electronic red envelope to the social software. After receiving the electronic red envelope, the social software sends it to the chat interface of the chat group for sharing, so that a group member in the chat group can acquire all or some money in the electronic red envelope. It should be noted that because the process of sending, by the social software, an electronic red envelope generation request to the server to obtain a generated electronic red envelope is a mature existing technology, details of the process are not described again.

That the social software receives a selection instruction for a "generation operation entry for an electronic red envelope" sent by a group member is still taken as an example. In response to the instruction, a corresponding operation executed by the social software may further be: sending an electronic red envelope generation request to a serve (such as an electronic red envelope server), so as to trigger the server to generate at least one electronic red envelope according to the electronic red envelope generation request and directly send the generated electronic red envelope to a group member terminal used by another group member in the chat group.

In the embodiment of the present application, in response to the interface element presentation instruction sent by the server, the social software may further present interface elements such as text information, a picture or a video in addition to the operation entry.

Interface elements presented by social software may be determined according to interface element information included in the interface element presentation instruction. In one implementation, the interface element information may be data forming an interface element (such as HTML code of the interface element), so that the social software can directly generate the interface element according to the data and display the interface element. In another implementation, the interface element information may be an interface element identifier mapped to an interface element locally stored in the social software, so that the social software can acquire the corresponding interface element according to the identifier and display the interface element.

In one implementation, the group member selection request described above may include a service identifier of the predetermined service operation. Based on the service identifier of the predetermined service operation as well as a preset mapping relationship between interface element information and service identifiers of predetermined service operations, the server may obtain interface element information mapped to the service identifier of the predetermined service operation included in the group member selection request. Further, the server may generate an interface element presentation instruction including the interface element information according to the obtained interface element information. For example, if the service identifier of the predetermined service operation is an identifier of a "tricky game service", interface element information mapped to the service identifier of the predetermined service operation may be information about a downloading address of a tricky game.

In one implementation, the service identifier of the predetermined service operation included in the group member selection request may be selected by the group member from service identifiers of selectable predetermined service operations according to a prompt of the social software before the group member selection request is sent.

The foregoing solution provided in the embodiment of the present application can achieve an objective of conveniently enabling a group member to execute a predetermined service operation according to group member information determined by a server. According to actual requirements, the solution can enable group members in a chat group to conveniently carry out recreational activities such as "Truth or Dare", "choose a 'lucky guy' to send a red envelope", and "choose a 'lucky guy' to pay for the electronic order", thus greatly improving social software using experience of the group members.

It should be noted that entities executing the steps of the method provided in Embodiment 1 of the present application may be the same or different. For example, step 11 to step 13 may be executed by a same device, or step 11 to step 13 may be executed by different devices.

### Embodiment 2

To solve the problem of low efficiency of a service operation manner in the prior art, Embodiment 2 of the present application provides a method for performing a service operation on the basis of a chat group. The method may be executed by, but not limited to, a server of the chat group or any device that can implement the method, for example, at least one of a smart TV, a router, and the like.

For ease of description, using the method being executed by the server of the chat group as an example, implementations of the method are introduced below. It can be understood that the method being executed by the server of the chat group is merely an exemplary description, but should not be construed as a limitation on the method.

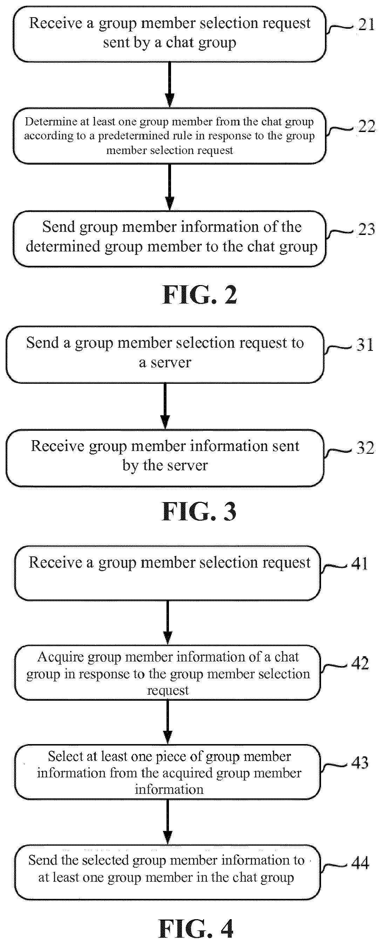

Specifically, the schematic implementation flowchart of the method is as shown in FIG. 2, and includes the following steps:
Step 21: A group member selection request sent by a chat group is received.

The group member selection request may be sent by, but not limited to, at least one of a mobile phone, a tablet computer, a PC, a smart TV, and any terminal device capable of running social software. Alternatively, the selection request may also be sent by the social software.

Functions that can be implemented by the social software in Embodiment 2 of the present application are similar to the functions that can be implemented by the social software in Embodiment 1, and details are not described again.

In Embodiment 2 of the present application, the group member selection request sent by the chat group may be sent by any group member in the chat group.

Step 22: At least one group member is determined from the chat group according to a predetermined rule in response to the group member selection request.

In the embodiment of the present application, in response to the group member selection request, the server may determine a group member from a database for storing group member information of the chat group. Generally, the server may use a chat group identifier of the chat group to which the group member belongs as a basis for querying the database. The chat group identifier used as the query basis may be received by the server. For example, the group member selection request or another request received by the server may carry the chat group identifier.

Definitely, if the group member that triggers the social software to initiate the group member selection request currently joins in only one chat group, the server may directly determine, according to an identifier of the group member, the chat group to which the group member belongs, thereby determining group member information of the chat group without using the chat group identifier.

It should be noted that if the server receives two or more group member selection requests at the same time and these group member selection requests are sent by group member terminals (or social software) used by group members in a same chat group, the server may choose to respond to one of the group member selection requests and discard other group member selection requests. Alternatively, the server may first respond to one of the group member selection requests, and put other group member selection requests in a request queue, thereby responding to the group member selection requests one by one.

In the embodiment of the present application, for the manner of determining, by the server, at least one group member from the chat group according to the predetermined rule, reference may be made to the determination manner described in Embodiment 1 of the present application. Details are not described herein again.

The at least one group member mentioned herein may include, but is not limited to: all group members in the chat group or partial group members in the chat group. The partial group members in the chat group may be group members having a specified characteristic, for example, a group member corresponding to the determined group member information, partial or all group members in the chat group other than the group member corresponding to the server-determined group member information, group members of a particular gender, group members of a particular age range, group members in a particular geographical location, and so on.

Step 23: Group member information of the determined group member is sent to the chat group, so that the determined group member or a group member other than the determined group member executes a predetermined service operation.

By means of the foregoing method provided in Embodiment 2 of the present application, group member information can be determined in response to a group member determination instruction and sent to the chat group, so that the group member can execute a predetermined service operation according to the determined group member information. Therefore, a group member terminal can acquire information of a group member determined from group members in the chat group and execute a predetermined service operation while the group members in the chat group do not need to edit and send text information that can be displayed in a chat interface. Therefore, execution efficiency of a service operation is improved.

In order to make it easy for at least one group member in the chat group to execute a predetermined service operation according to the determined group member information, the group member selection request may further include a service identifier of the predetermined service operation. Therefore, the method provided in the embodiment of the present application may further include the following steps:
After the group member selection request sent by the chat group is received, an interface element presentation instruction is generated according to the service identifier of the predetermined service operation included in the group member selection request. The interface element presentation instruction is sent to the chat group, so that the determined group member or a group member other than the determined group member executes the predetermined service operation according to the interface element. Sending the interface element presentation instruction to the chat group includes sending the interface element presentation instruction to at least one group member in the chat group.

The interface element presentation instruction is used to instruct a receiver of the instruction to present the corresponding interface element. The interface element mentioned herein is the same as the interface element in Embodiment 1 of the present application, and details are not described herein again.

A specific manner of generating an interface element presentation instruction by the server may include: obtaining a service identifier of a predetermined service operation; obtaining interface element information mapped to the obtained service identifier of the predetermined service operation according to a preset mapping relationship between interface element information and service identifiers of predetermined service operations; and generating an interface element presentation instruction according to the acquired interface element information.

The service identifier of the predetermined service operation may be sent by a group member terminal or social software. For example, the service identifier of the predetermined service operation may be included in a group member determination instruction. Alternatively, the service identifier of the predetermined service operation may also be a service identifier of a default predetermined service operation set in the server.

In Embodiment 2 of the present application, the server may send the interface element presentation instruction to at least one group member in the chat group in at least one of the following three manners:
1. sending the interface element presentation instruction to the group member corresponding to the determined group member information;
2. sending the interface element presentation instruction to partial or all group members in the chat group other than the group member corresponding to the determined group member information; and
3. sending the interface element presentation instruction to a group member having a specified characteristic in the chat group.

The specified characteristic mentioned herein may include, but is not limited to, at least one of the following characteristics:
gender, age, location; preference, degree of intimacy, and social relationship type.

Specifically, the degree of intimacy may refer to a degree of intimacy with the group member corresponding to the server-determined group member information. The social relationship type may refer to a type of a social relationship with the group member corresponding to the server-determined group member information.

In the embodiment of the present application, according to actual requirements, the interface elements that the interface element presentation instruction instructs the receiver to present may further include at least one of text information, a picture and a video.

The foregoing solution of enabling social software to present an operation entry provided in the embodiment of the present application can achieve an objective of conveniently enabling a group member to execute a predetermined service operation according to group member information determined by a server. According to actual requirements, the solution can enable group members in the chat group to conveniently carry out recreational activities such as "Truth or Dare", "choose a 'lucky guy' to send a red envelope", and "choose a 'lucky guy' to pay for the electronic order", thus greatly improving social software using experience of the group members.

It should be noted that entities executing the steps of the method provided in Embodiment 2 of the present application may be the same or different. For example, step 21 to step 23 may be executed by a same device. Alternatively, step 21 and step 22 are executed by a device 1, and step 23 is executed by a device 2, and so on.

### Embodiment 3

Currently, after a chat group is established, if a specified operation needs to be completed by a group member in the chat group, a group member (referred to as the group member hereinafter) needs to be selected from the chat group first, and group members in the chat group are enabled to know group member information of the group member. The specified operation mentioned herein may be, for example, issuing an electronic red envelope or executing a payment operation for an electronic order, and so on.

According to the prior art, group members in a chat group edit and send text information that can be displayed in the chat interface, so that the group member can be selected and group member information of the group member can be acquired by the group members in the chat group. Apparently, such a group member information acquisition manner has low efficiency.

To solve the problem in the prior art, Embodiment 1 of the present application provides a method for acquiring group member information. The method may be executed by, but not limited to, at least one of a mobile phone, a tablet computer, a PC, a smart TV, and any terminal device capable of running social software. In addition, the method may also be executed by the social software.

For ease of description, using the method being executed by social software as an example, implementations of the method are introduced below. It can be understood that the method being executed by social software is merely an exemplary description, but should not be construed as a limitation on the method. The social software in the embodiment of the present application may have some other functions in addition to the function of supporting a chat (which may be a text chat, voice chat, or video chat) of a group member. For example, the function supported by the social software may be, but is not limited to, at least one of the following functions:
operation functions for a payment institution (such as a bank) electronic account of the group member: for example, transferring, generating an electronic red envelope, paying for water, electricity, gas and other living facilities, and so on; an electronic shopping function; a QR code scanning function; a function of generating a QR code according to the electronic account; a function of querying stock exchange conditions; a game function; a social information presentation function: for example, presenting information released in Moments or presenting blog content, and so on.

Specifically, a schematic implementation flowchart of a method for acquiring group member information according to Embodiment 3 is as shown in FIG. 3, and the method includes the following main steps:
Step 31: A group member selection request is sent to a server corresponding to a chat group.

Implementation of step 31 is similar to the implementation of step 11 in Embodiment 1, and concepts mentioned in step 31 are the same as the concepts in step 11. Therefore, step 31 is not described in detail herein again.

Step 32: Group member information of at least one group member that is determined by the server from the chat group according to a predetermined rule in response to the group member selection request is received.

Because an implementation process of determining, by the server, group member information of at least one group member from the chat group according to a predetermined rule in response to the group member selection request is similar to the implementation process of step 22 in Embodiment 2, details are not described herein again.

By means of the method provided in the embodiment of the present application, a server can be triggered to select group member information and send the group member information to a group member terminal as long as a group member selection instruction is sent to the server. Thus, the group member terminal can acquire the group member information determined from information of group members in the chat group, while the group members in the chat group do not need to edit and send text information that can be displayed in a chat interface. Therefore, efficiency of acquiring group member information is improved.

In addition, the social software displays an image and a nickname of the group member corresponding to the group member information sent by the server, so that the group members in the chat group can intuitively and clearly know the group member corresponding to the selected group member information. That is, the foregoing method provided in the embodiment of the present application can efficiently enable the group members to have unified cognition about the selected group member information. Thus, compared with the prior art in which the group members need to edit and issue text information in the chat interface to confirm the group member information of the selected group member, the solution provided in the embodiment of the present application can save processing resources of group member terminals used by the group members while enabling the group members to have unified cognition.

To solve the problem of low efficiency of a user information acquisition manner in the prior art, Embodiment 3 of the present application further provides a method for sending group member information. The method may be executed by, but not limited to, a server or any device that can implement the method, for example, at least one of a smart TV, a router, and the like.

For ease of description, using the method being executed by a server as an example, implementations of the method are introduced below. It can be understood that the method being executed by a server is merely an exemplary description, but should not be construed as a limitation on the method.

Specifically, the schematic implementation flowchart of the method is as shown in FIG. 4, and includes the following steps:
Step 41: A group member selection request is received.

The group member selection request may be sent by, but not limited to, at least one of a mobile phone, a tablet computer, a PC, a smart TV, and any terminal device capable of running social software. Alternatively, the selection request may also be sent by the social software.

Functions that can be implemented by the social software in Embodiment 2 of the present application are similar to the functions that can be implemented by the social software in Embodiment 1, and details are not described again.

Step 42: Group member information of a chat group is acquired in response to the group member selection request.

The group member information of the chat group refers to information of group members included in the chat group. The information may be, but is not limited to, an identifier of the group member, such as a real name, a nickname, an ID card number, an account of the group member or a unique number of the group member in the chat group. Alternatively, the information may also be image information of the group member, for example, an avatar picture used by the group member in the chat group, and so on.

In the embodiment of the present application, in response to the group member selection request, the server may acquire group member information from a database for storing the group member information of the chat group. Generally, the server may use a chat group identifier of the chat group to which the group member belongs as a basis for querying the database. The chat group identifier used as the query basis may be received by the server. For example, the group member selection request or another request received by the server may carry the chat group identifier.

Definitely, if the group member that triggers the social software to initiate the group member selection request currently joins in only one chat group, the server may directly determine, according to the identifier of the group member, the chat group to which the group member belongs, thereby obtaining the group member information of the chat group without using the chat group identifier.

It should be noted that if the server receives two or more group member selection requests at the same time and these group member selection requests are sent by group member terminals (or social software) used by group members in a same chat group, the server may choose to respond to one of the group member selection requests and discard other group member selection requests. Alternatively, the server may first respond to one of the group member selection requests, and put other group member selection requests in a request queue, thereby responding to the group member selection requests one by one.

Step 43: At least one piece of group member information is selected from the acquired group member information.

In the embodiment of the present application, after acquiring the group member information of the chat group, the server may select group member information according to a selection rule. The selection rule may include, but is not limited to, at least one of the following:
randomly selecting at least one piece of group member information;
sequentially selecting at least one piece of group member information according to a descending order (or an ascending order) of degrees of activeness of the group members in the chat group;
sequentially selecting at least one piece of group member information according to time points from early to late (or from late to early) when the group members join in the chat group;
and so on.

Step 44: The selected group member information is sent to at least one group member in the chat group.

The at least one group member mentioned herein may include, but is not limited to: all group members in the chat group or partial group members in the chat group. The partial group members in the chat group may be group members having a specified characteristic, for example, a group member corresponding to the selected group member information, a group member corresponding to group member information that is not selected by the server in the group member information of the chat group acquired by the server, group members of a particular gender, group members of a particular age range, group members in a particular geographical location, and so on.

In one implementation, the method shown in FIG. 4 may further include a step of: displaying, in a chat interface, an image and/or a text identifier of the group member corresponding to the received group member information

In one implementation, after the step of sending a group member selection request to a server corresponding to the chat group and before the step of displaying, in the chat interface, an image and/or a text identifier of the group member corresponding to the received group member information, the method may further include the step of: alternately displaying specific information in the chat interface, to indicate that a group member selection process is being performed. The specific information specifically may be group members in the group or may be some specific images. For example, it is like a face changing process, or the like. Specifically, the step specifically may be: alternately displaying, in the chat interface, specific information of the group members in the chat group. The specific information may include at least one of an image and a text identifier.

In one implementation, when the chat interface of the chat group is provided with a group member selection request trigger button, after the step of sending a group member selection request to a server corresponding to the chat group and before the step of displaying, in the chat interface, an image and/or text identifier of the group member corresponding to the received group member information, the method may further include: displaying the group member selection request trigger button in a predetermined display manner, so that the group member selection request trigger button has a predetermined animation effect.

By means of the foregoing method provided in Embodiment 2 of the present application, in response to a group member selection instruction, group member information can be selected and sent to a group member terminal. Thus, the group member terminal can acquire the group member information selected from information of group members in the chat group, while the group members in the chat group do not need to edit and send text information that can be displayed in a chat interface. Therefore, efficiency of acquiring group member information is improved.

### Embodiment 4

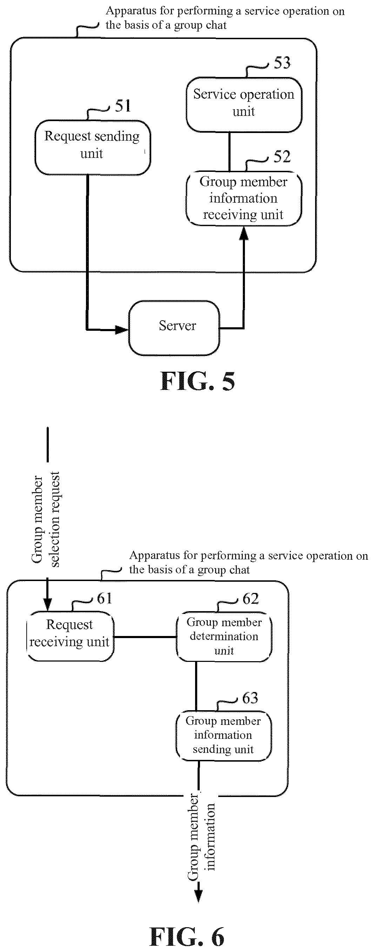

To solve the problem of low efficiency in a service operation manner in the prior art, Embodiment 4 of the present application provides an apparatus for performing a service operation on the basis of a chat group. A specific schematic structural diagram of the apparatus is as shown in FIG. 5, including a request sending unit 51, a group member information receiving unit 52, and a service operation unit 53.

The request sending unit 51 is configured to send a group member selection request to a server corresponding to the chat group. The group member information receiving unit 52 is configured to receive group member information of at least one group member that is determined by the server from the chat group according to a predetermined rule in response to the group member selection request. The service operation unit 53 is configured to respond to execution of a predetermined service operation by the group member corresponding to the group member information, or respond to execution of the predetermined service operation by a group member other than the group member corresponding to the group member information.

In one implementation, the apparatus provided in Embodiment 3 of the present application may further include a presentation instruction receiving unit and an element presentation unit. The presentation instruction receiving unit is configured to receive an interface element presentation instruction sent by the server, the interface element being corresponding to the predetermined service operation. The element presentation unit is configured to present the corresponding interface element according to the interface element presentation instruction. The service operation unit is specifically configured to respond to execution of the predetermined service operation by the group member corresponding to the group member information according to the interface element or respond to execution of the predetermined service operation by a group member other than the group member corresponding to the group member information according to the interface element.

In one implementation, the apparatus may further include: a selection instruction receiving unit configured to receive a selection instruction for the operation entry; and an operation execution unit configured to execute an operation corresponding to the operation entry in response to the selection instruction received by the selection instruction receiving unit.

To make it easy for the group member to trigger the group member selection request, the apparatus provided in the embodiment of the present application may further include a button presentation unit and a request sending unit.

The button presentation unit is configured to present a group member selection request trigger button in a chat interface of the chat group. Therefore, the request sending unit 51 may be specifically configured to: receive a trigger instruction for the group member selection request trigger button, and send a group member selection request to the server corresponding to the chat group in response to the trigger instruction.

In one implementation, the group member information is: group member information that is randomly determined in response to the group member selection request by the server from the group member information of the chat group acquired by the server.

To enable the group members to intuitively know which group member is corresponding to the group member information determined by the server, in one implementation, the apparatus provided in Embodiment 3 of the present application may further include:
an image presentation unit configured to display, in the chat interface, an image and/or a text identifier of the group member corresponding to the group member information received by the group member information receiving unit 52.

In order to enable a user to intuitively sense that the server is in a state of "determining a user from the chat group" after the group member selection request is sent to the server, in one implementation, the user image display unit is further configured to:
alternately display, in the chat interface, specific information of the users in the chat group after the request sending unit 51 sends a group member selection request to the server corresponding to the chat group and before the user image display unit displays, in the chat interface, the image of the group member corresponding to the received group member information. The specific information includes at least one of an image and a text identifier.

In one implementation, the request sending unit 51 may be specifically configured to acquire a chat group identifier; generate a group member selection request including the chat group identifier according to the chat group identifier and send a group member selection request to the server. Therefore, the group member information of the chat group may be acquired by the server according to the chat group identifier.

In the embodiment of the present application, a server can be triggered to determine group member information and send the group member information to a group member terminal as long as a group member determination instruction is sent to the server. Thus, the group member terminal can acquire the group member information determined from information of group members in the chat group and then execute a predetermined service operation, while the group members in the chat group do not need to edit and send text information that can be displayed in a chat interface. Therefore, efficiency of acquiring group member information is improved.

The apparatus provided in Embodiment 4 of the present application may also be used for acquiring group member information instead of responding to execution of the predetermined service operation by the group member. For example, the apparatus may include a request sending unit 51 and a group member information receiving unit 52, but does not include a service operation unit 53. Functions of the request sending unit 51 and the group member information receiving unit 52 are similar to those described above, and details are not described herein again. When the apparatus includes the request sending unit 51 and the group member information receiving unit 52 but does not include the service operation unit 53, the apparatus may be referred to as an "apparatus for acquiring group member information of a chat group".

By means of the apparatus for acquiring group member information of a chat group provided in Embodiment 3 of the present application, a server can be triggered to determine group member information and send the group member information to a group member terminal as long as a group member determination instruction is sent to the server. Thus, the group member terminal can acquire the group member information determined from information of group members in the chat group, while the group members in the chat group do not need to edit and send text information that can be displayed in a chat interface. Therefore, efficiency of acquiring group member information is improved.

### Embodiment 5

To solve the problem of low efficiency in a service operation manner in the prior art, Embodiment 1 of the present application provides an apparatus for performing a service operation on the basis of a chat group. A specific schematic structural diagram of the apparatus is as shown in FIG. 6, including: a request receiving unit 61, a group member information acquisition unit 62, and a group member information determination unit 63. The request receiving unit 61 is configured to receive a group member selection request sent by the chat group. The group member determination unit 62 is configured to determine at least one group member from the chat group according to a predetermined rule in response to the group member selection request received by the request receiving unit 61. The group member information sending unit 63 is configured to send group member information of the determined group member to the chat group, so that the determined group member or a group member other than the determined group member executes a predetermined service operation.

In one implementation, the apparatus provided in Embodiment 5 of the present application may further include a presentation instruction generation unit and a presentation instruction sending unit. The presentation instruction generation unit is configured to generate an interface element presentation instruction. The presentation instruction sending unit is configured to send the interface element presentation instruction generated by the presentation instruction generation unit to at least one group member in the chat group.

In one implementation, the presentation instruction sending unit may be configured to: send the interface element presentation instruction to the group member corresponding to the determined group member information; or send the interface element presentation instruction to partial or all group members in the chat group other than the group member corresponding to the determined group member information; or send the interface element presentation instruction to a group member having a specified characteristic in the chat group.

In one implementation, the presentation instruction generation unit may be specifically configured to: obtain a service identifier of a predetermined service operation; acquire interface element information mapped to the obtained service identifier of the predetermined service operation according to a preset mapping relationship between interface element information and service identifiers of predetermined service operations; and generate an interface element presentation instruction according to the acquired interface element information.

The foregoing apparatus provided in Embodiment 5 of the present application can determine group member information and send the group member information to a group member by responding to a group member determination instruction, so that the determined group member or a group member other than the determined group member can execute a predetermined service operation. Thus, the group member can execute the predetermined service operation, while group members in the chat group do not need to edit and send text information that can be displayed in a chat interface. Therefore, efficiency of a service operation is improved.

### Embodiment 6

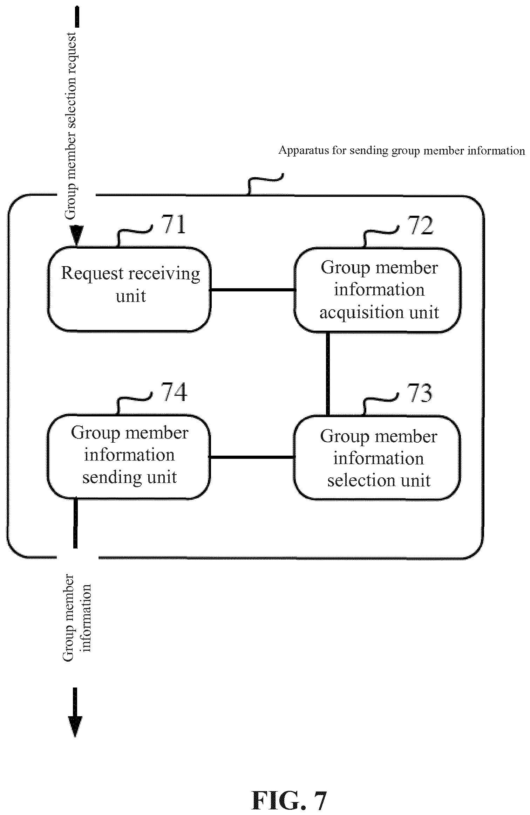

To solve the problem of low efficiency in a group member information acquisition manner in the prior art, Embodiment 6 of the present application provides an apparatus for sending group member information. The specific structural diagram of the apparatus is as shown in FIG. 7, including a request receiving unit 71, a group member information acquisition unit 72, a group member information selection unit 73, and a group member information sending unit 74.

The request receiving unit 71 is configured to receive a group member selection request.

The group member information acquisition unit 72 is configured to acquire group member information of a chat group in response to the group member selection request received by the request receiving unit 71.

The group member information selection unit 73 is configured to select at least one piece of group member information from the group member information acquired by the group member information acquisition unit 72.

The group member information sending unit 74 is configured to send the group member information selected by the group member information selection unit 73 to a group member terminal used by at least one group member in the chat group.

In one implementation, the apparatus provided in Embodiment 7 of the present application may further include a presentation instruction generation unit and a presentation instruction sending unit. The presentation instruction generation unit is configured to generate an interface element presentation instruction after the group member information selection unit 73 selects at least one piece of group member information. The presentation instruction sending unit is configured to send the interface element presentation instruction generated by the presentation instruction generation unit to a group member terminal used by at least one group member in the chat group.

The interface element presentation instruction is used for instructing a receiver of the instruction to present a corresponding interface element.

In one implementation, the presentation instruction sending unit may be configured to:
send the interface element presentation instruction to a group member corresponding to the selected group member information; or
send the interface element presentation instruction to partial or all group members corresponding to group member information not selected; or
send the interface element presentation instruction to a group member having a specified characteristic in the chat group.

The group member information not selected is group member information that is not selected from the group member information of the chat group.

The specified characteristic includes at least one of the following characteristics:
gender, age, location, preference, degree of intimacy, social relationship type.

In one implementation, the presentation instruction generation unit may be specifically configured to: obtain a service identifier; acquire interface element information mapped to the obtained service identifier according to a preset mapping relationship between interface element information and service identifiers; and generate an interface element presentation instruction according to the acquired interface element information.

In one implementation, the interface element may be, but is not limited to, at least one of:
an operation entry, text information, a picture, a video, and a text input field.

In one implementation, the operation entry may be, but is not limited to, at least one of the following operation entries:
a payment operation entry for an electronic order; and
a generation operation entry for an electronic red envelope.

In one implementation, the group member information selection unit 73 may be configured to: randomly select at least one piece of group member information from the acquired group member information.

In one implementation, the group member selection request may include a chat group identifier. In this case, the group member information acquisition unit 72 may be specifically configured to: acquire the chat group identifier from the group member selection request; and acquire group member information of a chat group corresponding to the chat group identifier.

By means of the foregoing method provided in Embodiment 2 of the present application, in response to a group member selection instruction, group member information may be selected and sent to a group member terminal. Thus, the group member terminal can acquire group member information selected from information of group members in a chat group, while the group members in the chat group do not need to edit and send text information that can be displayed in a chat interface. Therefore, efficiency of acquiring group member information is improved.

In addition, the foregoing operation entry presentation solution provided in the embodiment of the present application can achieve an objective of conveniently enabling a group member to execute a particular operation according to group member information selected by a server. According to actual requirements, the solution can enable group members in the chat group to conveniently carry out recreational activities such as "Truth or Dare", "choose a 'lucky guy' to send a red envelope", and "choose a 'lucky guy' to pay for the electronic order", thus greatly improving social software using experience of the group members.

Those skilled in the art should understand that the embodiments of the present invention may be provided as a method, a system, or a computer program product. Therefore, the present invention may employ a form of a complete hardware embodiment, a complete software embodiment, or an embodiment combining software and hardware aspects. Moreover, the present invention may employ a form of a computer program product implemented on one or more computer usable storage media (which includes, but is not limited to, a magnetic disk memory, a CD-ROM, an optical memory, and the like) that include computer usable program code.

Described above are merely the embodiments of the present application, which are not intended to limit the present application. For those skilled in the art, the present application may have various alterations and changes. Any modification, equivalent replacement, and improvement made without departing from the spirit and principle of the present application should be included in the scope of the claims of the present application.

## Claims

1. A method for performing a service operation on the basis of a chat group, wherein the chat group comprises at least two group members, the method comprising:
sending a group member selection request to a server corresponding to the chat group;
receiving group member information of at least one group member that is determined by the server from the chat group according to a predetermined rule in response to the group member selection request; and
responding to execution of a predetermined service operation by the group member corresponding to the group member information, or responding to execution of the predetermined service operation by a group member other than the group member corresponding to the group member information.

2. The method of claim 1, wherein after the step of sending a group member selection request to a server corresponding to the chat group, the method further comprises:
receiving an interface element presentation instruction sent by the server, the interface element being corresponding to the predetermined service operation; and
presenting the corresponding interface element according to the interface element presentation instruction; and
the step of responding to execution of a predetermined service operation by the group member corresponding to the group member information specifically comprises: responding to execution of the predetermined service operation by the group member corresponding to the group member information according to the interface element, or the step of responding to execution of the predetermined service operation by a group member other than the group member corresponding to the group member information specifically comprises: responding to execution of the predetermined service operation by a group member other than the group member corresponding to the group member information according to the interface element.

3. The method of claim 2, wherein the group member selection request comprises a service identifier of the predetermined service operation, and the interface element is an interface element of a service operation corresponding to the service identifier and determined by the server according to the service identifier.

4. The method of claim 3, wherein the interface element is an operation entry of the predetermined service operation, and the step of responding to execution of the predetermined service operation by the group member corresponding to the group member information according to the interface element specifically comprises:
receiving a selection instruction for the operation entry from the group member corresponding to the group member information; and
executing an operation corresponding to the operation entry in response to the selection instruction.

5. The method of claim 1, wherein a chat interface of the chat group is provided with a group member selection request trigger button; and the step of sending a group member selection request to a server corresponding to the chat group specifically comprises:
receiving a trigger instruction for the group member selection request trigger button; and
sending a group member selection request to the server corresponding to the chat group in response to the trigger instruction.

6. The method of any of claims 1 to 5, wherein the step of determining, by the server, at least one group member from the chat group according to a predetermined rule in response to the group member selection request specifically comprises:
randomly determining, by the server, at least one group member from the chat group in response to the group member selection request.

7. The method of any of claims 1 to 5, wherein the method further comprises:
displaying, in the chat interface, an image and/or a text identifier of the group member corresponding to the received group member information.

8. The method of claim 7, wherein after the step of sending a group member selection request to a server corresponding to the chat group and before the step of displaying, in the chat interface, an image and/or a text identifier of the group member corresponding to the received group member information, the method further comprises:
alternately displaying, in the chat interface, specific information of the group members in the chat group,
wherein the specific information comprises at least one of an image and a text identifier.

9. The method of claim 7, wherein when the chat interface of the chat group is provided with the group member selection request trigger button, after the step of sending a group member selection request to a server corresponding to the chat group and before the step of displaying, in the chat interface, an image and/or a text identifier of the group member corresponding to the received group member information, the method further comprises:
displaying the group member selection request trigger button in a predetermined display manner, so that the group member selection request trigger button has a predetermined animation effect.

10. A method for performing a service operation on the basis of a chat group, wherein the chat group comprises at least two group members, the method comprising:
receiving a group member selection request sent by the chat group;
determining at least one group member from the chat group according to a predetermined rule in response to the group member selection request; and
sending group member information of the determined group member to the chat group, so that the determined group member or a group member other than the determined group member executes a predetermined service operation.

11. The method of claim 10, wherein the group member selection request comprises a service identifier of the predetermined service operation, and the method further comprises:
generating an interface element presentation instruction according to the service identifier of the predetermined service operation comprised in the group member selection request after the group member selection request sent by the chat group is received; and
sending the interface element presentation instruction to the chat group, so that the determined group member or a group member other than the determined group member executes the predetermined service operation according to the interface element.

12. The method of claim 10, wherein the step of determining at least one group member from the chat group according to a predetermined rule in response to the group member selection request specifically comprises:
randomly determining at least one group member from the chat group in response to the group member selection request.

13. A method for acquiring group member information of a chat group, wherein the chat group comprises at least two group members, the method comprising:
sending a group member selection request to a server corresponding to the chat group; and
receiving group member information of at least one group member that is determined by the server from the chat group according to a predetermined rule in response to the group member selection request.

14. The method of claim 13, wherein a chat interface of the chat group is provided with a group member selection request trigger button; and the step of sending a group member selection request to a server corresponding to the chat group specifically comprises:
receiving a trigger instruction for the group member selection request trigger button; and
sending a group member selection request to the server corresponding to the chat group in response to the trigger instruction.

15. The method of claim 13 or 14, wherein the step of determining, by the server, at least one group member from the chat group according to a predetermined rule in response to the group member selection request specifically comprises:
randomly determining, by the server, at least one group member from the chat group in response to the group member selection request.

16. The method of claim 15, wherein the method further comprises:
displaying, in the chat interface, an image and/or a text identifier of the group member corresponding to the received group member information.

17. The method of claim 16, wherein after the step of sending a group member selection request to a server corresponding to the chat group and before the step of displaying, in the chat interface, an image and/or a text identifier of the group member corresponding to the received group member information, the method further comprises:
alternately displaying, in the chat interface, specific information of the group members in the chat group,
wherein the specific information comprises at least one of an image and a text identifier.

18. The method of claim 16, wherein when the chat interface of the chat group is provided with the group member selection request trigger button, after the step of sending a group member selection request to a server corresponding to the chat group and before the step of displaying, in the chat interface, an image and/or a text identifier of the group member corresponding to the received group member information, the method further comprises:
displaying the group member selection request trigger button in a predetermined display manner, so that the group member selection request trigger button has a predetermined animation effect.

19. A method for sending group member information, comprising:
receiving a group member selection request;
acquiring group member information of a chat group in response to the group member selection request;
selecting at least one piece of group member information from the acquired group member information; and
sending the selected group member information to at least one group member in the chat group.

20. An apparatus for performing a service operation on the basis of a chat group, wherein the chat group comprises at least two group members, the apparatus comprising:
a request sending unit configured to send a group member selection request to a server corresponding to the chat group;
a group member information receiving unit configured to receive group member information of at least one group member that is determined by the server from the chat group according to a predetermined rule in response to the group member selection request; and
a service operation unit configured to respond to execution of a predetermined service operation by the group member corresponding to the group member information, or respond to execution of the predetermined service operation by a group member other than the group member corresponding to the group member information.

21. The apparatus of claim 20, wherein the apparatus further comprises:
a presentation instruction receiving unit configured to receive an interface element presentation instruction sent by the server, the interface element being corresponding to the predetermined service operation; and
an element presentation unit configured to present the corresponding interface element according to the interface element presentation instruction;
and the service operation unit is specifically configured to respond to execution of the predetermined service operation by the group member corresponding to the group member information according to the interface element or respond to execution of the predetermined service operation by a group member other than the group member corresponding to the group member information according to the interface element.

22. The apparatus of claim 21, wherein the apparatus further comprises:
a button presentation unit configured to present a group member selection request trigger button in a chat interface of the chat group;
wherein the request sending unit is specifically configured to receive a trigger instruction for the group member selection request trigger button, and send a group member selection request to the server corresponding to the chat group in response to the trigger instruction.

23. The apparatus of any of claims 20 to 22, wherein the apparatus further comprises:
a group member image display unit configured to display, in the chat interface, an image and/or a text identifier of the group member corresponding to the received group member information.

24. The apparatus of claim 23, wherein the group member image display unit is further configured to:
after the request sending unit sends a group member selection request to the server corresponding to the chat group and before the group member image display unit displays, in the chat interface, the image and/or text identifier of the group member corresponding to the received group member information,
alternately display, in the chat interface, specific information of the group members in the chat group,
wherein the specific information comprises at least one of an image and a text identifier.

25. The apparatus of claim 23, wherein when the chat interface of the chat group is provided with the group member selection request trigger button, the group member image display unit is further configured to:
after the request sending unit sends a group member selection request to the server corresponding to the chat group and before the group member image display unit displays, in the chat interface, the image and/or text identifier of the group member corresponding to the received group member information,
display the group member selection request trigger button in a predetermined display manner, so that the group member selection request trigger button has a predetermined animation effect.

26. An apparatus for performing a service operation on the basis of a chat group, wherein the chat group comprises at least two group members, the apparatus comprising:
a request receiving unit configured to receive a group member selection request sent by the chat group;
a group member determination unit configured to determine at least one group member from the chat group according to a predetermined rule in response to the group member selection request; and
a group member information sending unit configured to send group member information of the determined group member to the chat group, so that the determined group member or a group member other than the determined group member executes a predetermined service operation.

27. An apparatus for acquiring group member information of a chat group, wherein the chat group comprises at least two group members, the apparatus comprising:
a request sending unit configured to send a group member selection request to a server corresponding to the chat group; and
a group member information receiving unit configured to receive group member information of at least one group member that is determined by the server from the chat group according to a predetermined rule in response to the group member selection request.

28. An apparatus for sending group member information, comprising:
a request receiving unit configured to receive a group member selection request;
a group member information acquisition unit configured to acquire group member information of a chat group in response to the group member selection request received by the request receiving unit;
a group member information selection unit configured to select at least one piece of group member information from the group member information acquired by the group member information acquisition unit; and
a group member information sending unit configured to send the group member information selected by the group member information selection unit to at least one group member in the chat group.
